# EUROPÄISCHE PATENTSCHRIFT

(11) **EP 1 445 228 B1**
(45) Veröffentlichungstag und Bekanntmachung des Hinweises auf die Patenterteilung: **05.09.2007**
(21) Anmeldenummer: 04000979.7
(22) Anmeldetag: 19.01.2004
(51) Int. Cl.: B65H 75/40, H02G 11/02

(54) **Vorrichtung zur Halterung von Leitungen**
Cable storage device
Dispositif de stockage de cable

(30) Priorität: 20.01.2003 DE 20300805 U
(43) Veröffentlichungstag der Anmeldung: 11.08.2004
(73) Patentinhaber: Mura Metalltechnik GmbH, 48683 Ahaus-Wessum (DE)
(72) Erfinder: Mura, Antonio, 48683 Ahaus-Wessum (DE)
(74) Vertreter: Busse, Harald F.W.

(56) Entgegenhaltungen:
- WO-A-99/55613
- WO-A-03/026995
- DE-A- 10 128 337
- DE-A- 19 840 831

## Beschreibung

Die Erfindung betrifft eine Vorrichtung mit einer Wickeltrommel zur Leitungsaufnahme,insbesondere für eine elektrische Leitung, nach dem Oberbegriff des Anspruchs 1.

Die Verwendung derartiger Vorrichtungen etwa im Baubereich oder im Haushalt, um Leitungen von einigen Metern bis einigen zehn Metern raumsparend zu lagern und bei Bedarf abwickeln zu können, ist bekannt Derartige Vorrichtungen erfordern nach Benutzung der ganz oder teilweise ausgezogenen Leitung deren Aufwickeln um die Wickeltrommel. Insbesondere bei langen zu haltenden Leitungen ist ein derartiger Aufwickelvorgang sehr zeitaufwendig, da das Kabel oder dergleichen gleichzeitig in eine einigermaßen lagenweise Ablage der einzelnen Windungen auf der Mantelfläche der Wickeltrommel zu führen ist. Für eine Person ist es dann erforderlich, mit einer Hand die Trommel zu drehen und mit der anderen Hand die Leitung zu ordnen. Häufig kommt es dabei zu einem korkenzieherähnlichen Verdrillen von Leitungsabschnitten. Wenn diese sich noch zusätzlich irgendwo verhakt hat, was etwa auf Baustellen wegen vieler herumstehender Ausrüstungen häufig vorkommt, muß das Aufwickeln unterbrochen werden, um zunächst die Leitung vom Hindernis zu lösen. Unter Umständen werden sogar zwei Personen an einer derartigen Aufgabe zu beteiligen sein.

Aus der DE 101 28 337 A1 ist eine elektrisch antreibbare Wickeltrommel bekannt. Diese ist in einem Gestell mit einem oberen Tragegriff angeordnet. Dabei ist ein Betätigungsschalter im freien Endbereich des Traggriffs angeordnet. Damit liegt er im Anprallbereich bei Anschlagen der Vorrichtung an eine Wand oder bei einem Umfallen der Vorrichtung. Gerade dies kommt jedoch bei dem üblichen Umgang mit derartigen Vorrichtungen, etwa auf Baustellen, häufig vor. Eine Batterie ist im Fuß des Gestells und damit ebenfalls im gefährdeten Bereich angeordnet. Zudem ist zur Vermeidung einer Überlastung des Antriebs eine Kupplung, insbesondere Rutschkupplung, vorgesehen, die bei zu schnellem Drehen der Wickeltrommel den Antrieb auskuppelt, somit den weiteren Antrieb unterbricht und damit für eine dauerhaft gleichmäßige Arbeit hinderlich ist. Bei einem antriebsfreien Drehen der Trommel besteht die Gefahr, daß ohne weiteren Zug an der Leitung die Trommel weiterdreht und somit die Leitung über die Seitenwangen läuft und sich verheddert.

Die WO-A-03/026995 zeigt eine motorisch antreibbare Wickeltrommel mit einem relativ aufwendigen Halterahmen, bei der in einer Version zum Ein- und Ausschalten ein Betätigungsknopf zum Ein-und Ausschalten vorgesehen ist, der nach außen in Verlängerung des Tragegriffs herausragt und daher in einem möglichen Anprallbereich der Vorrichtung ungeschützt liegt. Zudem ist die Bedienung dieses Betätigungsknopfes unbequem.

Der Erfindung liegt das Problem zugrunde, hier eine Verbesserung zu schaffen.

Die Erfindung löst dieses Problem durch eine Vorrichtung mit den Merkmalen des Anspruchs 1 Hinsichtlich vorteilhafter Ausgestaltungen der Erfindung wird auf die weiteren Ansprüche 2 bis 18 verwiesen.

In der Ausbildung nach Anspruch 1 ist der Betätigungsgriff geschützt unterhalb des Tragegriffs angeordnet. Bei einem Sturz oder Anschlagen der Vorrichtung liefert somit der Tragegriff, der üblicherweise als Stahl- oder Leichtmetallrohr ausgebildet ist, einen mechanischen Schutz für den Betätigungsgriff.

Das Aufwickeln kann sowohl bei stehender als auch bei bewegter Vorrichtung durchgeführt werden. Dadurch kann beispielsweise ein Benutzer während des Aufwickelns die Vorrichtung in der Hand halten und einem Hindernis entgegengehen, an dem sich etwa ein Ende der Leitung verhakt hat. Das Lösen der Leitung von dem Hindernis kann daher ohne Zeitverzug erfolgen. Besonders komfortabel und sicher kann die Vorrichtung dann während des Betriebs transportiert werden, wenn der Betätigungsgriff zu dem üblichen Tragegriff nicht nur parallel und in geringem Abstand angeordnet ist, sondern auch gleichgerichtet zu diesem erstreckt und durch Zugkraft nach oben zu betätigen ist. Dann kann beim Tragen der Vorrichtung der Betätigungsgriff mit nach oben gerichteter Kraft gleichzeitig mit derselben Hand mit angezogen werden, ohne daß für die Betätigung weiterer Aufwand oder Zusatzkraft erforderlich ist. Das Tragen und das Betätigen des Antriebs können dann mit einer Hand durchgeführt werden. Sobald der Betätigungsgriff losgelassen wird, was auch während des Transports geschehen kann, kann der Antrieb stoppen und die Trommel freigeben. Auch das Wiedereinschalten des Antriebs ist im getragenen Zustand mit derselben Hand möglich. Auch ein Aufwickeln der Leitung von Hand bleibt möglich.

Besonders vorteilhaft wird durch den Betätigungsgriff nicht nur der Antrieb eingeschaltet, sondern in Doppelfunktion auch das Getriebe mechanisch in Eingriff gebracht. Damit ist beim Lösen des Griffes automatisch eine Freilaufstellung erreicht, etwa um durch Zug an der Leitung diese abzuwickeln.

Es ist dabei besonders günstig, wenn beim Betätigen des Betätigungsgriffes zunächst das Getriebe in Eingriff kommt und kurz danach noch während des Anziehens des Griffes die elektrische Antriebseinschaltung erfolgt. Dadurch ist ein Übersetzen der Getriebezahnräder verhindert.

Wenn zudem eine schleifende Bremse für die Freilaufstellung vorgesehen ist, ist auch beim manuellen Abwickeln verhindert, daß die Leitung durch Nachdrehen der Wickeltrommel über die Seitenwangen überschlagen und sich dort um Teile des Gestells wickeln bzw. in sich verdrehen kann.

Insbesondere für Anwendungen auf Baustellen oder derartigen verschmutzten und/oder feuchten Bereichen ist es vorteilhaft, den Antrieb innerhalb der Wickeltrommel anzuordnen, so daß dieser abgedichtet liegen kann.

Gleiches gilt auch für ein Ladegerät, das auf diese Weise ebenfalls nicht nur gegen mechanische Beschädigung geschützt, sondern auch gegen Feuchtigkeit abgedichtet liegen kann.

Eine besonders sicher geführte Aufwicklung ist sowohl bei handrotierten als auch insbesondere bei angetriebenen Wickeltrommeln durch die weiter vorgesehene Führungseinrichtung nach Anspruch 15 ermöglicht. Die offenen Schraubenfedern oder Schnecken ermöglichen gleichzeitig, daß Verschmutzungen von der Leitung abgestreift werden und nach unten durchfallen, wodurch ein Verstopfen der Führungseinrichtung vermieden ist. Eine zusätzliche Reinigungsvorrichtung, etwa ein Bürstenbesatz oder eine Durchlaufmanschette, kann vorteilhaft vorgesehen sein, insbesondere für den Einsatz auf Baustellen.

Weitere Vorteile und Merkmale der Erfindung ergeben sich aus einem in der Zeichnung dargestellten und nachfolgend beschriebenen Ausführungsbeispiel des Gegenstandes der Erfindung.

In der Zeichnung zeigt :
- Fig. 1: eine querschnittliche Ansicht einer ersten erfindungsgemäßen Vorrichtung ohne eine Bremse mit der Übersicht halber nur im oberen Bereich eingezeichneten Querschnitten der gehaltenen Leitung im betätigten und - gestrichelt eingezeichnet - unbetätigten Zustand,

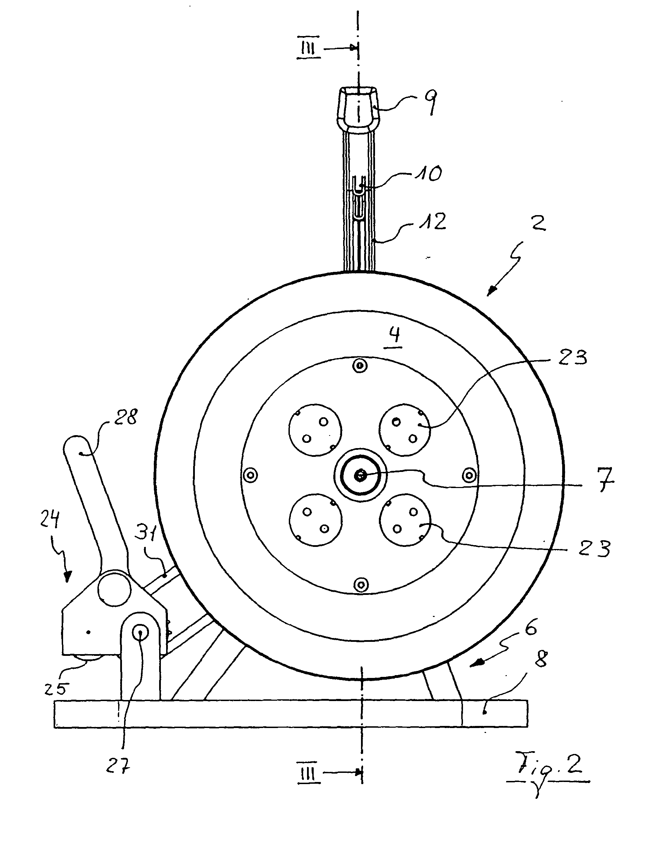

- Fig. 2: eine stirnseitige Ansicht der Vorrichtung zur Halterung von Leitungen aus Richtung des Pfeils II in Fig. 1,

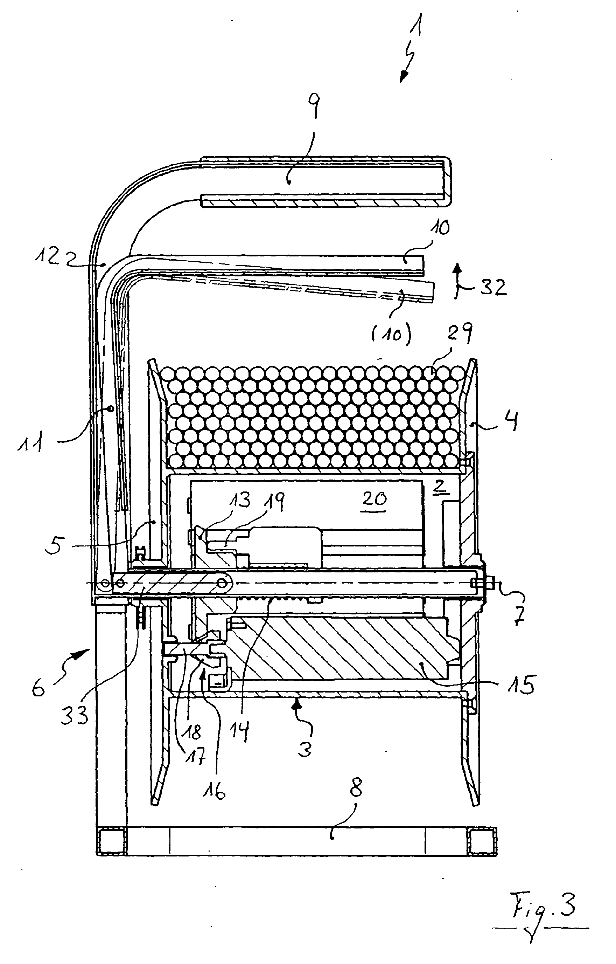

- Fig. 3: einen Schnitt entlang der Linie III-III in Fig. 2,

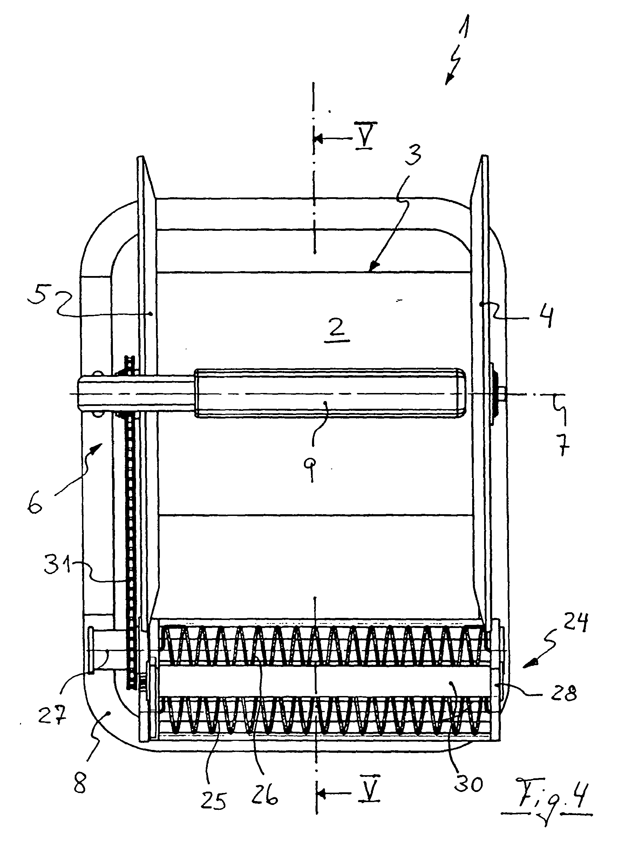

- Fig. 4: eine Ansicht der Vorrichtung nach Fig. 1 von oben,

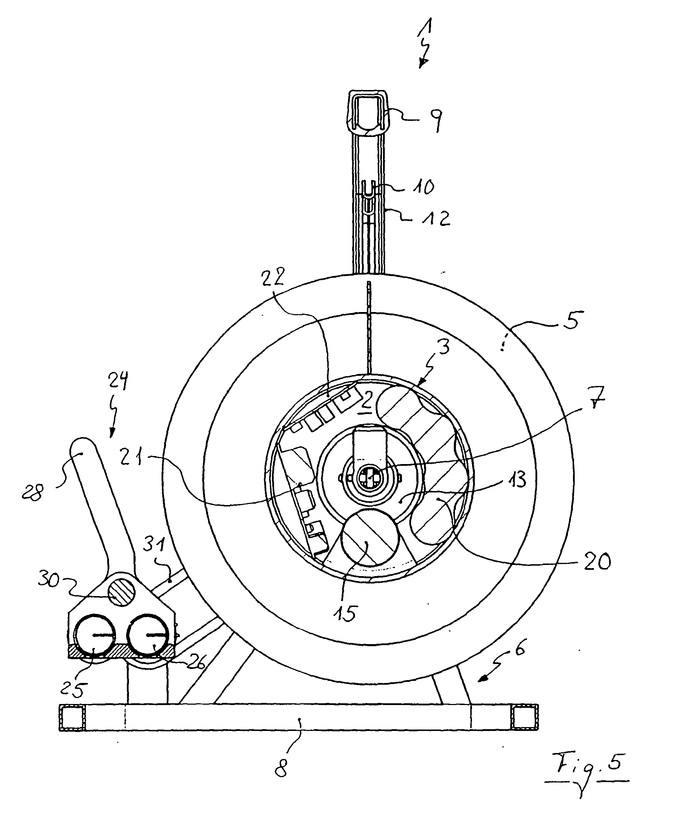

- Fig. 5: einen Schnitt entlang der Linie V-V in Fig. 4,

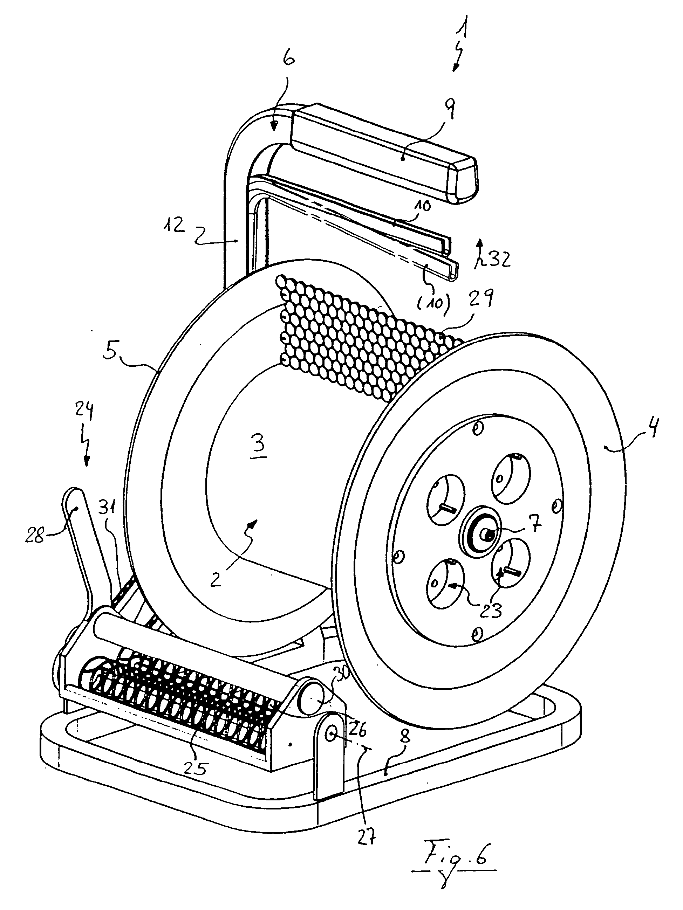

- Fig. 6: eine perspektivische Ansicht der Vorrichtung nach Fig. 1 zur Halterung von Leitungen mit zugehöriger Führungseinrichtung,

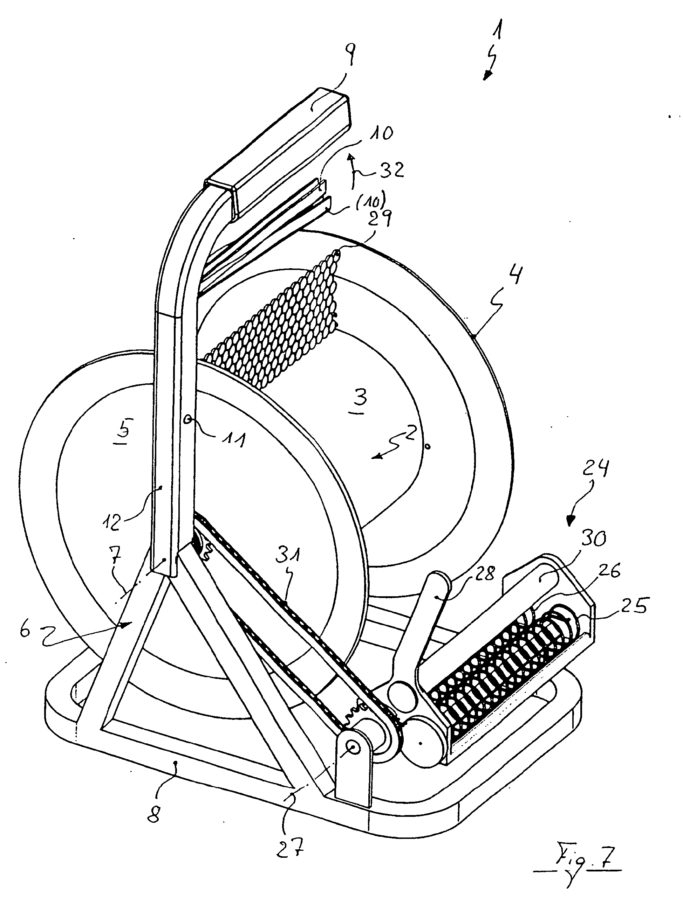

- Fig. 7: eine weitere perspektivische Ansicht der Vorrichtung nach Fig. 6, gesehen von der gegenüberliegenden Trommelseite,
- Fig. 8: eine ähnliche Ansicht wie Fig. 1 einer Vorrichtung, die zusätzlich mit einer schleifenden Bremse versehen ist,
- Fig. 9: eine schematisierte Ansicht einer Vorrichtung ähnlich Fig. 1 mit einer Leitungsführung, die zwei Kunststoffschnecken umfaßt,
- Fig. 10: eine Einzelteilansicht einer Kunststoffschnecke der Leitungsführung.

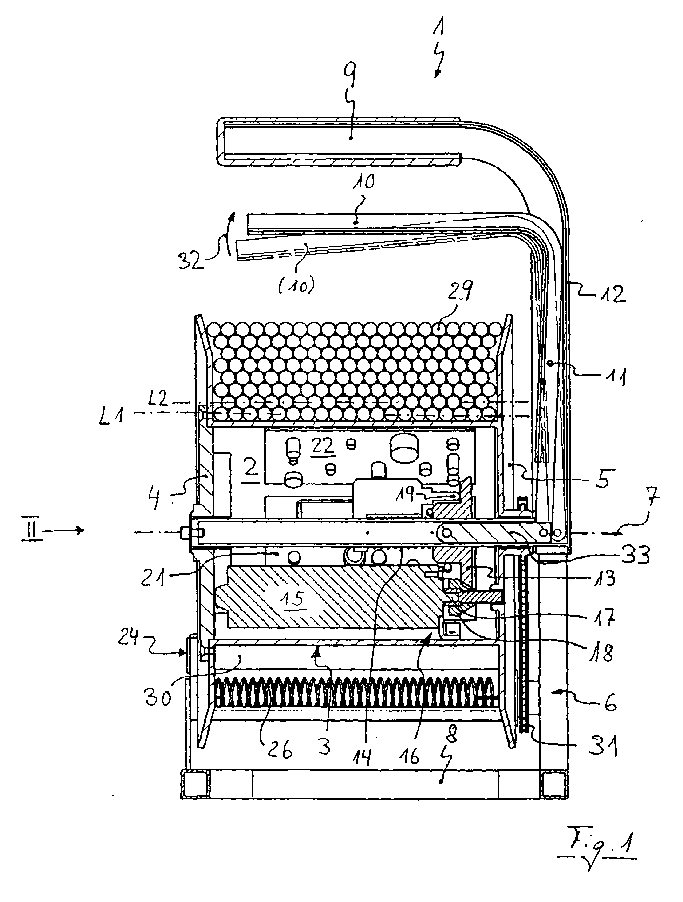

Die in Fig. 1 ff. dargestellte Vorrichtung 1 zur Halterung von Leitungen 29 umfaßt eine Trommel 2, auf deren unterbrochener oder vorteilhaft geschlossener Mantelfläche 3 eine Leitung 29, insbesondere eine Elektroleitung, aufwickelbar ist. Die Trommel 3 ist stirnseitig mit Seitenwangen 4, 5 versehen, die den Aufwickelbereich axial begrenzen. Sie ist insgesamt an einem Tragrahmen 6 um eine Achse 7 drehbar gelagert. Der Tragrahmen 6 umfaßt in seinem unteren Bereich einen Standfuß 8 und im oberen Bereich einen vertikal oberhalb der Trommel 2 gelegenen und diese parallel zu ihrer Drehachse 7 übergreifenden Tragegriff 9, der lang erstreckt ist und die Trommel 2 über einen zumindest erheblichen Teil ihrer axialen Erstreckung übergreift.

Unterhalb des Tragegriffs 9 und parallel zu diesem ist in Griffweite ein Betätigungsgriff 10 vorgesehen, der zur Betätigung um eine Horizontalachse 11 an einem aufragenden Pfosten 12 des Tragrahmens 6 durch nach oben, auf den Tragegriff 9 zu gerichtete Zugkrafteinleitung mechanisch schwenkbar ist.

Innerhalb der Trommel 2 ist auf der Achse 7 ein Sonnenrad 13 angeordnet, das durch den Betätigungsgriff 10 aus einer von einer axial wirkenden Feder 14 ausgedrückten Freilaufstellung in eine Betätigungsstellung axial bewegbar ist und somit einen Getriebeeingriff bewirkt.

Des weiteren ist in der Trommel 2 ein motorischer Antrieb 15 angeordnet, der im Ausführungsbeispiel als elektrischer Standard-Getriebemotor ausgebildet ist und mit Gleichspannung betrieben werden kann. Der Motor 15 hat eine zylindrische Umrißgestalt mit einer axialen Erstreckung parallel zur Drehachse 7 der Trommel 2 und einem Durchmesser von wenigen zehn Millimetern. Er kann als Standardteil zugekauft werden, was die Herstellungskosten senkt.

An seinem einen axialen Ende 16 ist die Motorwelle 17 an einer Seitenwange 5 der Trommel 2 drehbar gelagert. Die Motorwelle 17 ist mit einem konischen Planetenrad 18 versehen, in das das Sonnenrad 13 in betätigter Stellung (Fig. 1) eingreift.

Des weiteren ist in der Trommel 2 ein Betätigungsschalter 19 für den Antrieb 15 angeordnet, der zur Betätigung axial in Richtung der Wange 4 eindrückbar ist. Die Betätigung erfolgt durch einen Bereich des axial verschieblichen Sonnenrads 13.

Mit dem Getriebeeingriff ist daher zeitlich kurz nachfolgend die Aktivierung des Antriebs 15 verbunden.

In der Trommel 2 ist weiterhin ein Energiespeicher 20 in Form eines Batteriepacks angeordnet, das über ein dort ebenfalls geschützt und abgedichtet liegendes Ladegerät 21 aufladbar ist. Der Antrieb kann daher auch ohne Anschluß eines elektrischen Kabels arbeiten. Der Energiespeicher 20 ist hier so ausgelegt, daß die Trommel 2 im 24-Stunden-Betrieb alle zwanzig Minuten aufgerollt werden kann.

Für den Antrieb 15 und das Ladegerät 21 sind elektronische Steueruhgskomponenten 22 ebenfalls in der Trommel 2 angeordnet. Sie stellen sicher, daß das Ladegerät 21 jedes Mal, wenn die Vorrichtung 1 mit einer elektrischen Energieversorgung verbunden ist, eine Nachladung der Batterie 20 bewirkt. Es müssen daher keine zusätzlichen manuellen Schaltelemente für das Ladegerät 21 vorgesehen sein. Eine Fehlbedienung ist ausgeschlossen. Wenn die Leitung 29 eine elektrische Leitung ist, ist daher automatisch, sobald diese ganz oder teilweise abgerollt und an ein Spannungsnetz angeschlossen ist, das Nachladen sichergestellt, wobei dann gleichzeitig Anschlußdosen 23 mit Spannung versorgt sind. Alternativ kann auch ein externes Ladegerät vorgesehen sein, insbesondere wenn die bevorrateten Leitungen 29 keine elektrischen Leitungen, sondern etwa Wasserleitungen sind.

Vorteilhaft sind alle elektrischen und antriebsmechanischen Teile 13, 14, 15, 17, 18, 19, 20, 21, 22 geschützt im Innenraum der Trommel 2 angeordnet, was die Verschmutzung dieser Teile verhindert und eine robuste Handhabung der Vorrichtung 1, wie im Baubereich üblich, ermöglicht. Zusätzliche schockabsorbierende Elemente können an den Beschlägen zur Festlegung dieser Teile vorgesehen sein.

Die elektronische Steuerung 22 kann zudem eine Sicherheitsschaltung beinhalten, die ein Einschalten des Antriebs 15 unterbindet, sofern die Kabeltrommel 2 an ein äußeres Spannungsnetz angeschlossen ist. Zusätzlich kann ein Einschalten des Antriebs 15 unterbunden sein, wenn eine der an der Seitenwange 4 befindlichen Anschlußdosen 23 belegt ist.

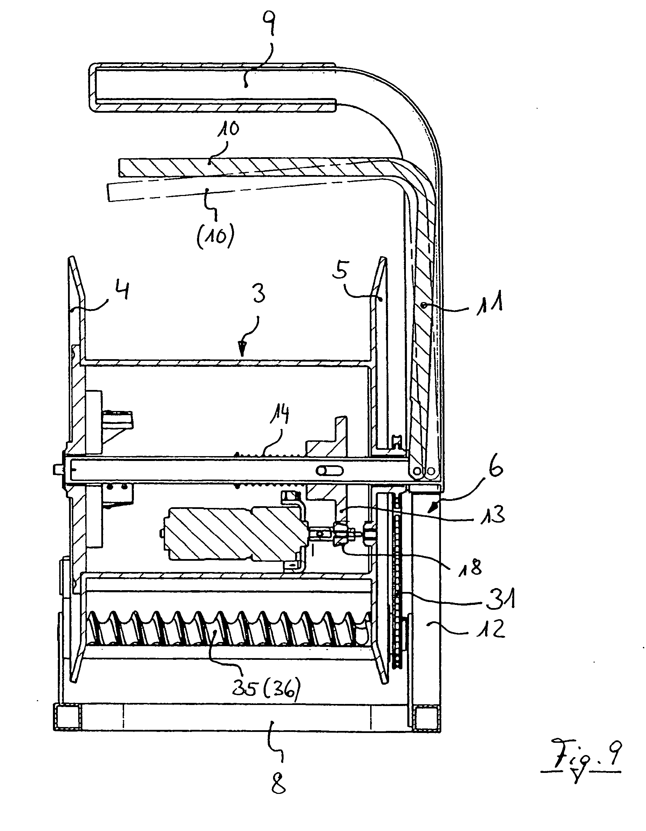

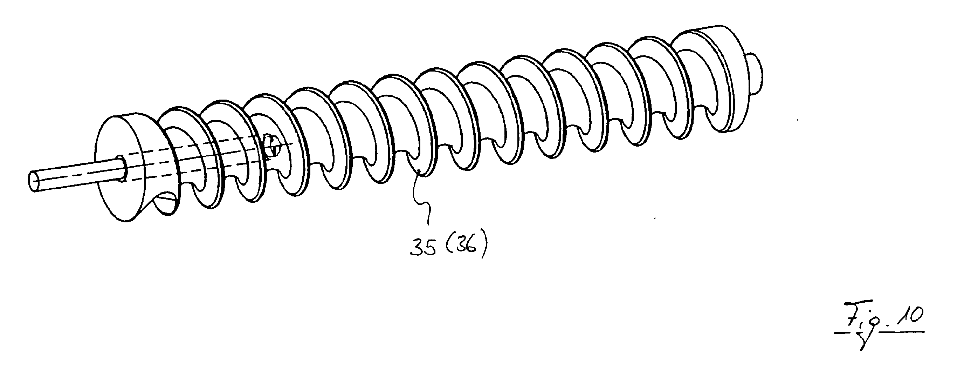

Der Wickeltrommel 2 vorgeschaltet ist im Ausführungsbeispiel eine ebenfalls an dem Tragrahmen 6 angeordnete Führungseinrichtung 24, die zwei um ihre jeweiligen Achsen gegensinnig zueinander rotierbare und gleichsinnig ansteigende Schraubenfedern 25, 26 oder (Fig. 9, Fig. 10) Schnecken 35, 36 umfaßt. Die Führungseinrichtung 24 ist um eine Achse 27 über einen Handgriff 28 um jeweils etwa 30° schwenkbar.

Die einlaufende Leitung 29 wird dadurch in Lagen L1, L2... auf der Trommel 2 aufgewickelt. Hierzu läuft die Leitung 29 zur Bildung einer ersten Lage L1 zwischen einer Feder 26 bzw. Schnecke 36 und einer Gegenrolle 30 von links nach rechts so lange, bis die Lage L1 vervollständigt ist und die letzte Windung an der Seitenwange 5 anliegt. Dann ist manuell der Handhebel 28 umzuschalten, so daß der nun einlaufende weitere Kabelabschnitt zwischen der Schraubenfeder 25 bzw. Schnecke 36 und der Gegenrolle 30 einläuft und damit die zweite Lage L2 gegenläufig zur ersten L1 angefüllt werden kann. An Stelle des Handhebels 28 kann auch eine motorische Umschaltung der Federn 25, 26 bzw. Schnecken 35, 36 vorgesehen sein, um jeweils eine andere in Eingriff mit der Leitung 29 zu bringen.

Zusätzlich kann eine Reinigungsvorrichtung - nicht gezeichnet - für die einlaufende Leitung 29, etwa durch Bürstenbesatz der Schraubenfedern 25, 26 oder durch eine abstreifende Einlaufmanschette, vorgesehen sein.

Die Schraubenfedern 25, 26 oder Schnecken 35, 36 sind über einen eventuell verkleideten Kettentrieb 31 mit dem Antrieb 15 verbunden und drehen somit bei dessen Betätigung automatisch um ihre jeweiligen Achsen, wodurch die Weiterleitung des einlaufenden Kabels 29 axial auf der Trommel 2 bewirkt ist.

Sofern keine Führungseinrichtung 24 vorgesehen ist, ist an deren Stelle ein u-förmiger Bügel vorgesehen, der einen Einlaufkanal für die Leitung 29 begrenzt und sicherstellt, daß diese beim Aufwickeln nicht seitlich außerhalb der Wangen 4, 5 laufen kann.

Zum Aufrollen der Leitung 29 wird der Betätigungsgriff 10 in Richtung des Pfeils 32 um die Achse 11 verschwenkt. Dadurch drückt ein auf der gegenüberliegenden Seite der Achse 11 auf der Drehachse 7 liegender Schubkörper 33 axial das Zahnrad 13 gegen die Kraft der Feder 14 in Eingriff mit dem Zahnrad 18 der Motorwelle 17. Gleichzeitig wird der Betätigungsschalter 19 betätigt und somit der Antrieb 15 eingeschaltet. Der Antrieb 15 rollt sich dadurch mit seinem Planetenrad 18 auf dem drehfesten Sonnenrad 13 ab. Da der Antrieb 15 in der Trommel 2 gelagert ist, wird diese somit um das Sonnenrad 13 gedreht. Durch die gleichzeitig mitbewegte Führungseinrichtung 24 wird dadurch die Leitung 29 in der oben geschilderten Weise lagenweise L1, L2... auf der Mantelfläche 3 der Trommel 2 aufgewickelt. Dabei kann die Vorrichtung 1 stehen oder am Tragegriff 9 in der Hand getragen werden, wobei der in Griffweite befindliche Betätigungsgriff 10 jederzeit gelöst oder neu angezogen werden kann. Bei Lösen des Griffes 10 rückt durch die Feder 14 das Zahnrad 13 axial aus seiner Eingriffsstellung mit dem Antriebszahnrad 18, nachdem der Betätigungsschalter 19 für den Antrieb 15 gelöst ist; dieser wird somit ausgeschaltet und braucht keine weitere Energie. Die Trommel 2 befindet sich dann automatisch in Freilaufstellung und kann von Hand sowohl im Auf- als auch im Abwickelsinn gedreht werden. Das Abrollen der Leitung 29 kann daher in bewährter Weise durch einfachen Zug an dieser bewirkt werden.

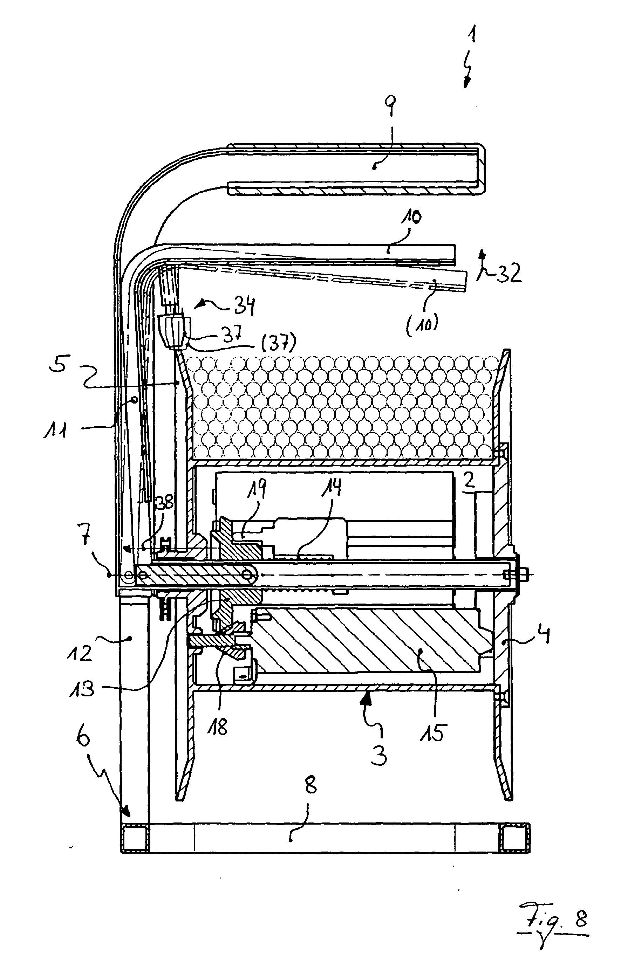

Besonders vorteilhaft ist dabei gemäß Fig. 8 eine schleifende Nachlaufbremse 34 vorgesehen, die einen abriebarmen Bremsklotz 37 umfaßt, der durch Loslassen des Betätigungsgriffes 10 automatisch in reibschlüssigen Eingriff mit der Seitenwange 5 der Wickeltrommel 2 gelangt. Die Bremse 34 ist hier wie auch der Betätigungsgriff 10 in beiden Stellungen gezeichnet. Beim Ziehen der Leitung 29 von der Wickeltrommel 2 im Abwickelsinn, das häufig schubweise durchgeführt wird, wird daher deren Rotation so weit gebremst, daß in den Zwischenzeiten, in denen kein Zug auf die Leitung 29 ausgeübt wird, die Trommel nicht oder nur langsam weiterdreht und ein Überschlagen der Leitung 29 über die Seitenwangen 4, 5 ausgeschlossen ist. Der Anpreßdruck des Bremsklotzes 37 kann einstellbar sein, um einen zu großen Widerstand zu vermeiden und andererseits eine hinreichende Verlangsamung sicherzustellen.

An Stelle des äußeren Bremsklotzes 37 kann auch ein mit der Achse rotierendes und durch Loslassen des Betätigungsgriffs 10 automatisch über Federkraft 14 in Richtung des Pfeils 38 verschieblicher Innenbremsklotz 39 auf der Rückseite des Sonnenrades 13 vorgesehen sein, der in Fig. 8 ebenfalls eingezeichnet ist und durch seine Bewegung in Richtung des Pfeils 38 in Schleifeingriff mit dem Gegenlager 40 der Seitenwange 5 gelangt.

Die Vorrichtung ist durch die Kapselung der Teile 13,14,15,16,17,18,19,20,21,22 in der Trommel 2 und durch den Verzicht auf irgendwelche Bedienelemente außerhalb des Betätigungsgriffes 10 besonders robust, wartungsarm und langlebig. Eine Reinigung der Vorrichtung 1 auch mit Wasser ist wegen der Abdichtung möglich. Bezugszeichenliste:
- 1: Vorrichtung,
- 2: Wickeltrommel,
- 3: Mantelfläche,
- 4: Seitenwange,
- 5: Seitenwange,
- 6: Tragrahmen,
- 7: Drehachse,
- 8: Standfuß,
- 9: Tragegriff,
- 10: Betätigungsgriff,
- 11: Horizontalachse,
- 12: aufragender Pfosten,
- 13: Sonnenrad,
- 14: Feder,
- 15: Antrieb,
- 16: axiales Ende,
- 17: Motorwelle,
- 18: Planetenrad,
- 19: Betätigungsschalter,
- 20: Batteriepack,
- 21: Ladegerät,
- 22: Elektronik,
- 23: Anschlußdosen,
- 24: Führungseinrichtung,
- 25: Schraubenfeder,
- 26: Schraubenfeder,
- 27: Achse,
- 28: Handhebel,
- 29: Leitung,
- 30: Gegenrolle,
- 31: Kettentrieb,
- 32: Zugrichtung,
- 33: Schubkörper,
- 34: Bremse,
- 35: Schnecke,
- 36: Schnecke,
- 37: Bremsklotz,
- 38: Richtung,
- 39: Innenbremsklotz,
- 40: Widerlager

## Patentansprüche

1. Tragbare Vorrichtung (1) zur Halterung von zumindest einer Leitung (29), insbesondere einer elektrische Leitung, mit einer zumindest im Aufwickelsinn der Leitung motorisch rotierbaren Wickeltrommel (2), deren Mantelfläche (3) zur Leitungsaufnahme dient,
**dadurch gekennzeichnet,**
**daß** die Vorrichtung (1) einen Tragegriff (9) umfaßt, zu dem parallel und in geringem Abstand ein Betätigungsgriff (10) für den Antrieb (15) angeordnet ist

2. Vorrichtung (1) nach Anspruch 1,
**dadurch gekennzeichnet,**
**daß** durch den Betätigungsgriff (10) in Doppelfunktion ein Schalter (19) für den Antrieb (15) betätigbar und ein Getriebeeingriff (13;18) bewirkbar ist.

3. Vorrichtung (1) nach Anspruch 2,
**dadurch gekennzeichnet,**
**daß** beim Betätigen des Betätigungsgriffes (10) nacheinander zuerst der Getriebeeingriff (13;18) und dann das Einschalten des Antriebs (15) erfolgt.

4. Vorrichtung (1) nach einem der Ansprüche 1 bis 3,
**dadurch gekennzeichnet,**
**daß** der Betätigungsgriff (10) als ein unterhalb des Tragegriffs (9) und im wesentlichen gleichgerichteter und ebenfalls lang erstreckter mechanischer Schwenkgriff ausbildet ist, der durch nach oben gerichtete Zugkraftbeaufschlagung den Antrieb aktiviert.

5. Vorrichtung (1) nach einem der Ansprüche 1 bis 4,
**dadurch gekennzeichnet,**
**daß** der Wickeltrommel (2) eine während der abwickelnden Rotation in Schleifeingriff stehende Bremse (34) zugeordnet ist.

6. Vorrichtung (1) nach Anspruch 5,
**dadurch gekennzeichnet,**
**daß** die Bremse (34) durch den Antrieb aktivierende Betätigung des Betätigungsgriffs (10) aus der Eingriffsstellung lösbar ist.

7. Vorrichtung (1) nach einem der Ansprüche 5 oder 6,
**dadurch gekennzeichnet,**
**daß** die Bremse (34) bei Lösen des Betätigungsgriffs (10) automatisch in Eingriffsstellung gelangt.

8. Vorrichtung (1) nach einem der Ansprüche 1 bis 7,
**dadurch gekennzeichnet,**
**daß** der motorische Antrieb (15) innerhalb der Wickeltrommel (2) geschützt angeordnet ist.

9. Vorrichtung (1) nach einem der Ansprüche 1 bis 8,
**dadurch gekennzeichnet,**
**daß** ein Energiespeicher (20) und/oder ein Ladegerät (21) innerhalb der Wickeltrommel (2) angeordnet ist oder sind.

10. Vorrichtung (1) nach einem der Ansprüche 1 bis 9 für eine elektrische Leitung (29),
**dadurch gekennzeichnet,**
**daß** ein Ladegerät (21) der Vorrichtung (1) automatisch einen Energiespeicher (20) auflädt, sobald die von der Vorrichtung (1) gehaltene elektrische Leitung (29) an ein Spannungsnetz angeschlossen ist.

11. Vorrichtung (1) nach einem der Ansprüche 1 bis 10,
**dadurch gekennzeichnet,**
der Antrieb (15) mitrotierbar ist und hierzu ein zentrales Sonnenrad (13) vorgesehen ist, daß von einem auf einer Motorwelle (17) angeordneten Planetenrad (18) umlaufen wird.

12. Vorrichtung (1) nach einem der Ansprüche 1 bis 11,
**dadurch gekennzeichnet,**
**daß** der Antrieb (15) ein Standard-Gleichstrommotor mit geringem Durchmesser ist.

13. Vorrichtung (1) nach einem der Ansprüche 1 bis 12 für eine elektrische Leitung (29),
**dadurch gekennzeichnet,**
**daß** die Vorrichtung (1) an zumindest einem stirnseitigen Ende (4) der Wickeltrommel (2) eine oder mehrere Anschlußdose(n) (23) für weiterführende elektrische Leitunggen und eine Sicherungsschaltung umfaßt, die eine gangetriebene Drehung der Trommel (2) nur bei frei belassenen Anschlußdose(n) (23) ermöglicht.

14. Vorrichtung (1) nach einem der Ansprüche 1 bis 13,
**dadurch gekennzeichnet,**
**daß** die Wickeltrommel (2) bei unbetätigtem Antrieb (15) in einer - gegebenenfalls gebremsten - Freilaufstellung gehalten ist.

15. Vorrichtung (1) nach einem der Ansprüche 1 bis 14,
**dadurch gekennzeichnet,**
**daß** diese eine Führungseinrichtung (24) umfaßt, die eine aufzuwickelnde Leitung (29) bezüglich ihrer axialen Lage auf der Wickeltrommel (2) führt.

16. Vorrichtung (1) nach einem der Ansprüche 1 bis 15,
**dadurch gekennzeichnet,**
**daß** der Wickeltrommel (2) eine Führungseinrichtung (24) vorgeordnet ist, die eine aufzuwickelnde Leitung (29) bezüglich ihrer axialen Lage auf der Wickeltrommel (2) führt und hierfür zumindest zwei mit zueinander gegensinniger Drehrichtung rotierbare offene Schraubenfedern (25;26) oder Schnecken (35;36) umfaßt.

17. Vorrichtung (1) nach Anspruch 16,
**dadurch gekennzeichnet,**
**daß** durch die Führungseinrichtung (24) die Windungen der Leitung (29) lagenweise (L1;L2...) axial nebeneinander auf der Mantelfläche (3) der Wickeltrommel (2) aufgewickelt werden und bei Fertigstellen einer Lage (L1...) eine motorische Umschaltung zur automatischen gegenläufigen Befüllung der nächsten Lage (L2...) betätigbar ist

18. Vorrichtung (1) nach einem der Ansprüche 16 oder 17,
**dadurch gekennzeichnet,**
**daß** der Führungseinrichtung (24) eine Reinigungsvorrichtung für die Leitung (29) zugeordnet ist.

## Claims

1. A portable device (1) for holding at least one cable (29). In particular an electric cable, comprising a winding drum (2) which can be motor-rotated at least in the direction of winding-up of the cable, the generated surface (3) of which drum serves to receive the cable,
**characterised in that**
the device (1) comprises a carrying handle (9), parallel to and at a slight distance from which is arranged an operating handle (10) for the drive (15).

2. A device (1) according to Claim 1,
**characterised in that**
a switch (19) for the drive (15) can be actuated and engagement of gears (13; 18) can be brought about by the operating handle (10) as a dual function.

3. A device (1) according to Claim 2,
**characterised in that**
upon actuating the operating handle (10) in succession first the engagement of gears (13; 18) and then the switching-on of the drive (15) takes place.

4. A device (1) according to one of Claims 1 to 3,
**characterised in that**
the operating handle (10) is in the form of a mechanical pivot handle [located] beneath the carrying handle (9) and substantially oriented in the same direction and likewise elongated, which activates the drive by the action of an upward-directed tensile force.

5. A device (1) according to one of Claims 1 to 4,
**characterised in that**
a brake (34) which is in frictional engagement during the unwinding rotation Is associated with the winding drum (2).

6. A device (1) according to Claim 5,
**characterised in that**
the brake (34) can be released from the engaged position by actuation of the operating handle (10) which activates the drive.

7. A device (1) according to one of Claims 5 or 6,
**characterised in that**
the brake (34) automatically moves into the engaged position upon release of the operating handle (10).

8. A device (1) according to one of Claims 1 to 7,
**characterised in that**
the motor drive (15) is arranged in protected manner inside the winding drum (2).

9. A device (1) according to one of Claims 1 to 8,
**characterised in that**
an energy store (20) and/or a charger (21) is or are located inside the winding drum (2).

10. A device (1) according to one of Claims 1 to 9 for an electric cable (29),
**characterised in that**
a charger (21) of the device (1) automatically charges an energy store (20) as soon as the electric cable (29) held by the device (1) is connected to a power supply.

11. A device (1) according to one of Claims 1 to 10,
**characterised in that**
the drive (15) can be jointly rotated and for this purpose a central sun wheel (13) is provided, around which a planet wheel (18) located on a motor shaft (17) rotates.

12. A device (1) according to one of Claims 1 to 11,
**characterised in that**
the drive (15) is a standard direct-current motor of small diameter.

13. A device (1) according to one of Claims 1 to 12 for an electric cable (29),
**characterised in that**
the device (1) on at least one end face (4) of the winding drum (2) comprises one or more socket(s) (23) for further electric cables and a protective circuit which permits driven rotation of the drum (2) only if the socket(s) (23) is/are left unoccupied.

14. A device (1) according to one of Claims 1 to 13,
**characterised in that**
the winding drum (2) when the drive (15) Is not actuated is held in an optionally braked - freely-running position.

15. A device (1) according to one of Claims 1 to 14,
**characterised in that**
it comprises a guide means (24) which guides a cable (29) which is to be wound up with respect to its axial position on the winding drum (2).

16. A device (1) according to one of Claims 1 to 15,
**characterised in that**
the winding drum (2) Is preceded by a guide means (24) which guides a cable (29) which is to be wound up with respect to its axial position on the winding drum (2) and comprises for this purpose at least two open helical springs (25; 26) or worms (35; 36) which can be rotated in contrary directions to each other.

17. A device (1) according to Claim 16,
**characterised in that**
the windings of the cable (29) are wound. In layers (L1; L2...) axially next to one another on the generated surface (3) of the winding drum (2) by the guide means (24) and when one layer is finished (L1...) a motor-driven changeover to automatic filling of the next layer (L2...) in the opposition direction can be actuated.

18. A device (1) according to one of Claims 16 or 17,
charactered in that
a cleaning device for the cable (29) is associated with the guide means (24).

## Revendications

1. Dispositif portatif (1) de stockage d'au moins un câble (29), notamment d'un câble électrique, avec au moins un tambour d'enroulement (2) à rotation motorisée dans le sens d'enroulement du câble, dont la surface enveloppe (3) sert à recevoir le câble,
**caractérisé en ce**
**que** le dispositif (1) comporte une poignée de transport (9), par rapport à laquelle une poignée de commande (10) pour l'entraînement (15) est disposée parallèlement et à faible distance.

2. Dispositif (1) salon la revendication 1,
**caractérisé en ce**
**que** grâce à la poignée de commande (10) en double fonction, un commutateur (19) pour l'entraînement (15) est actionnable et un engrènement (13 ; 18) est susceptible d'être provoqué.

3. Dispositif (1) selon la revendication 2,
**caractérisé en ce**
**que** lors de l'actionnement de la poignée de commande (10), l'un après l'autre sont effectués d'abord l'engrènement (13; 18), puis la mise en service de l'entraînement (15).

4. Dispositif (1) selon l'une quelconque des revendications 1 à 3,
**caractérisé en ce**
**que** la poignée de commande (10) est conçue comme une poignée pivotante mécanique s'étendant, au-dessous de la poignée de transport (9), égale en longueur et essentiellement parallèle à celle-ci, qui active l'entraînement en exerçant un effort de traction orienté vers le haut.

5. Dispositif (1) selon l'une quelconque das revendications 1 à 4,
**caractérisé en ce**
**que** sur le tambour d'enroulement (2) est agencé un frein (34) se trouvant en prise coulissée pendant la rotation de déroulement.

6. Dispositif (1) selon la revendication 5,
**caractérisé en ce**
**que** le frein (34) peut être desserré depuis la position de prise par l'actionnement de la poignée de commande (10) activant l'entraînement.

7. Dispositif (1) selon l'une quelconque des revendications 5 ou 6,
**caractérisé en ce**
**que** le frein (34) parvient automatiquement en position de prise lors du déblocage de la poignée de commande (10).

8. Dispositif (1) selon l'une quelconque des revendications 1 à 7.
**caractérisé en ce**
**que** l'entraînement motorisé (15) est disposé de manière protégée à l'intérieur du tambour d'enroulement (2).

9. Dispositif (1) selon l'une quelconque des revendications 1 à 8,
**caractérisé en ce**
**qu'**un réservoir d'énergie (20) et/ou un dispositif de chargement (21) est ou sont disposé(s) à l'intérieur du tambour d'enroulement (2).

10. Dispositif (1) selon l'une quelconque des revendications 1 à 9 pour un câble électrique (29),
**caractérisé en ce**
**qu'**un dispositif de chargement (21) du dispositif (1) charge automatiquement un réservoir d'énergie (20), dès que le câble électrique (29) maintenu par le dispositif (1) est raccordé à un réseau d'alimentation.

11. Dispositif (1) selon l'une quelconque des revendications 1 à 10,
**caractérisé en ce**
**que** l'entraînement (15) est corotatif et en outre, une roue solaire (13) est prévue, laquelle est pivotée par une roue planétaire (18) disposée sur un arbre du moteur (17).

12. Dispositif (1) selon l'une quelconque des revendications 1 à 11,
**caractérisé en ce**
**que** l'entraînement (15) est un moteur à courant continu standard présentent un petit diamètre.

13. Dispositif (1) selon l'une quelconque des revendications 1 à 12 pour un câble électrique (29),
**caractérisé en ce**
**que** le dispositif (1) comporte sur au moins une extrémité (4) côté frontal du tambour d'enroulement (2) une ou plusieurs prises (23) pour d'autres câbles électriques et un circuit de sécurité qui permet une rotation entraînée du tambour (2) uniquement en cas de prise(s) laissée(s) libre(s) (23).

14. Dispositif(1) selon l'une quelconque des revendications 1, à 13,
**caractérisé en ce**
**que** le tambour d'enroulement (2) est maintenu en cas d'entraînement (15) non actionné dans une position de roue libre, éventuellement freinée.

15. Dispositif (1) selon l'une quelconque des revendications 1 à 14,
**caractérisé en ce**
**que** celui-ci comporte un dispositif de guidage (24), qui guide un câble à enrouler (29) en ce qui concerne sa position axiale sur le tambour d'enroulement (2).

16. Dispositif(1) selon l'une quelconque des revendications 1 à 15,
**caractérisé en ce**
**qu'**un dispositif de guidage (24) est disposé en amont du tambour d'enroulement (2), lequel dispositif guide un câble à enrouler (29) en ce qui concerne sa position axiale sur le tambour d'enroulement (2) et comporte à cet effet au moins deux ressorts cylindriques ouverts (25 ; 26) rotatifs dont le sens de rotation est inversé l'un par rapport à l'autre ou des vis sans fin (35 ; 36),

17. Dispositif (1) selon la revendication 16,
**caractérisé en ce**
**que** grâce au dispositif de guidage (24), les enroulements du câble (29) sont enroulés par couches (L1 ; L2...) axialement l'un à côté de l'autre sur la surface enveloppe (3) du tambour d'enroulement (2) et lors de l'achèvement d'une couche (L1...,) une commutation motorisée destinée au remplissage contraire automatique de la prochaine couche (L2...) peut être actionnée.

18. Dispositif (1) selon l'une quelconque des revendications 16 à 17,
**caractérisé en ce**
**que** sur le dispositif de guidage (24) est agencé un dispositif de nettoyage pour le câble (29).
